# EUROPEAN PATENT SPECIFICATION

(11) **EP 3 822 948 B1**
(45) Date of publication and mention of the grant of the patent: **28.05.2025**
(21) Application number: 20204085.3
(22) Date of filing: 27.10.2020
(51) Int. Cl.: G08G 1/16, B60Q 9/00

(54) **METHOD AND APPARATUS FOR IMPROVING TRAFFIC SAFETY FOR A VEHICLE, AND METHOD AND APPARATUS FOR IMPROVING TRAFFIC SAFETY FOR AN INFRASTRUCTURE**
VERFAHREN UND VORRICHTUNG ZUR VERBESSERUNG DER VERKEHRSSICHERHEIT FÜR EIN FAHRZEUG UND VERFAHREN UND VORRICHTUNG ZUR VERBESSERUNG DER VERKEHRSSICHERHEIT FÜR EINE INFRASTRUKTUR
PROCÉDÉ ET APPAREIL PERMETTANT D'AMÉLIORER LA SÉCURITÉ DE LA CIRCULATION POUR UN VÉHICULE, ET PROCÉDÉ ET APPAREIL PERMETTANT D'AMÉLIORER LA SÉCURITÉ DE LA CIRCULATION POUR UNE INFRASTRUCTURE

(30) Priority: 14.11.2019 CN 201911111920
(43) Date of publication of application: 19.05.2021
(73) Proprietor: Robert Bosch GmbH, 70442 Stuttgart (DE)
(72) Inventor: XIE, Robert, Shanghai, Shanghai 200335 (CN); LIANG, Jinyao, Shanghai, Shanghai 200335 (CN)

(56) References cited:
- DE-A1- 102016 215 478
- DE-A1- 102018 206 042
- US-A1- 2017 218 678
- US-B1- 10 026 309

## Description

### Technical Field

The present invention relates to a method and apparatus for improving the traffic safety for a vehicle. The present invention further relates to a method and apparatus for improving the traffic safety for an infrastructure. The present invention further relates to a controller for a vehicle, and a vehicle having the controller. The present invention further relates to a controller for an infrastructure, and an infrastructure having the controller. The present invention further relates to a computer-readable storage medium.

### Background Art

In some traffic scenarios, dangerous situations may occur when the door of a vehicle is opened after the vehicle has been parked, for example, another traffic participant is too close to the door or another traffic participant collides with the door. Such dangerous situations may sometimes occur due to the negligence of the driver of the vehicle or other passengers of the vehicle, the position of another traffic participant being exactly in the blind area of the person who opens the door, or another traffic participant being hardly able to be detected for having a relatively small size and/or being unable to react in the case of a relatively fast speed, etc. Here, another traffic participant may be, for example, a motor vehicle, a motorcycle, an electric bicycle, a bicycle, a scooter, or a pedestrian, etc. A vehicle-mounted sensor (e.g. a radar sensor, a camera, etc.) is often unable to effectively avoid the above dangerous situations.

US 10 026 309 B1 provides a system and method for improving vehicle awareness and safety by generating and transmitting alerts in response to detecting a hazard in the environment omnidirectional to a vehicle awareness system. DE 10 2016 215478 A1 provides a method for warning road users in an environment of a motor vehicle of imminent disembarkation of one or more motor vehicle occupants of the motor vehicle. US 2017/218678 A1 provides a method for preventing vehicle door related accidents will help to detect oncoming traffic and/or nearby external objects when an occupant of the vehicle or the vehicle processor demonstrates an intent to open the vehicle door.

### Summary of the Invention

The present invention is set out by the appended claims.

An object of the present invention is to provide a method and apparatus for improving the traffic safety for a vehicle, which can give a pre-warning of or prevent dangerous situations when the door is opened after a vehicle has been parked. In addition, a further object of the present invention is to provide a method and apparatus for improving the traffic safety for an infrastructure, which can give, particularly based on a current traffic condition, a pre-warning of dangerous situations when the door of a vehicle is opened after the vehicle in the environment surrounding the infrastructure has been parked.

To this end, according to a first aspect of the present invention, a method for improving the traffic safety for a vehicle is provided, as defined by independent claim 1. The method comprises the following steps: sending a parking safety request to an infrastructure; receiving pre-warning information that is sent by the infrastructure in response to the parking safety request; detecting a safety trigger event if the pre-warning information indicates that the opening of the door of the vehicle will result in a dangerous situation; and triggering safety measures where the safety trigger event is detected. The parking safety request is sent to the infrastructure where a parking intention for the vehicle is detected. The parking intention for the vehicle is detected when at least one of the following situations occurs: the presence of a parking space being detected, and it being detected that the distance between the vehicle and the parking space is less than a predetermined distance threshold; and the presence of the parking space being detected, and it being detected that a time when a driver's attention is focused on the parking space exceeds a predetermined time threshold. The pre-warning information includes a type of other traffic participant that is to collide with the opened door and/or an expected time for collision.

The solutions may be particularly based on the following considerations: it is ascertained, based on the pre-warning information from the infrastructure rather than environment information detected by the vehicle itself, whether a dangerous situation will occur when the door is opened; and after the pre-warning information sent by the infrastructure is received, the safety measures are not directly triggered, but triggered only when a corresponding safety trigger event is detected.

Herein, the infrastructure is, for example, a roadside unit (RSU). The infrastructure can particularly detect a surrounding environment. For example, the infrastructure may be equipped with a camera apparatus, an ultrasonic sensor, a radar, etc. The infrastructure can communicate with an object, particularly a vehicle, in the surrounding environment. The communication can be performed based on any suitable communication protocol, for example, a PC5 protocol, an IEEE 802.11p protocol, etc. Optionally, the infrastructure can further communicate with an external server (particularly a cloud server) based on any suitable communication protocol. The infrastructure can further calculate features about a traffic scenario in the surrounding environment based on detected data and/or received data, particularly according to specific tasks. In addition, the infrastructure can further have a storage function.

In one embodiment of the present invention, the dangerous situation is that the distance between another traffic participant and the door is less than a predetermined distance threshold or that another traffic participant collides with the door. Herein, the predetermined distance threshold may be less than 3 metres, for example, it may be 2.5 metres, particularly 1.5 metres.

Herein, the first speed threshold is less than 10 kilometres per hour, for example, 7 kilometres per hour, particularly 5 kilometres per hour. Herein, the distance threshold is less than 5 metres, for example, it may be 3 metres, particularly 1.5 metres. Herein, the time threshold is greater than 0.5 minutes, for example, it may be 1 minute, particularly 1.5 minutes.

The above situations are merely exemplary, and do not mean that all situations where the parking intention is detected are exhaustive.

The parking intention can be detected particularly by reading the state of a corresponding functional unit of the vehicle and/or by using a corresponding vehicle-mounted sensor apparatus.

According to the present invention, the pre-warning information particularly indicates whether the opening of the door of the vehicle will result in a dangerous situation, particularly the door colliding with another traffic participant.

In one embodiment of the present invention, the pre-warning information can indicate one of the following situations where the opening of the door will result in a dangerous situation, particularly colliding with another traffic participant; and the opening of the door will not result in a dangerous situation, particularly colliding with another traffic participant.

In one embodiment of the present invention, the pre-warning information only indicates that the opening of the door will result in a dangerous situation, particularly colliding with another traffic participant.

In one embodiment of the present invention, the pre-warning information may additionally comprise other information, for example, the type of other traffic participant that is to collide with the opened door and/or an expected time for collision, etc.

In one embodiment of the present invention, the safety trigger event is detected when at least one of the following situations occurs: it being detected that the door of the vehicle is to be opened; the automatic parking function or the semi-automatic parking function being ended; the speed of the vehicle being lowered to 0; a transmission of the vehicle being placed in a parking gear; and a parking brake of the vehicle being placed in a parking position.

The above situations are merely exemplary, and do not mean that all situations where the safety trigger event is detected are exhaustive.

The safety trigger event can be detected particularly by reading the state of a corresponding functional unit of the vehicle and/or by using a corresponding vehicle-mounted sensor apparatus.

In one embodiment of the present invention, the safety measures comprise at least one of the following measures: outputting an audio warning signal; outputting a video warning signal; and outputting a tactile warning signal. For example, warning information is displayed on a display apparatus in the vehicle and/or a light emitting apparatus in the vehicle flashes at a predetermined frequency to give a warning and/or a sound producing apparatus in the vehicle produces a predetermined tone or voice to give a warning. Alternatively or additionally, a warning is given with the damping for which the door is opened being greater than a predetermined damping threshold. Preferably, a warning is given with the door being locked upon the first attempt to open the door.

In one embodiment of the present invention, the pre-warning information sent by the infrastructure in response to the parking safety request is periodically received until a sending end condition is satisfied, wherein a pre-warning end request is sent to the infrastructure particularly where the sending end condition is satisfied. Herein, the detection of a safety trigger event is to be carried out only if the received pre-warning information indicates that the opening of the door of the vehicle will result in a dangerous situation, and safety measures are triggered where the safety trigger event is detected. In this way, safety measures can always be triggered according to pre-warning information generated based on the latest traffic condition, thereby further improving safety and reliability.

In one embodiment of the present invention, the sending end condition is satisfied when at least one of the following situations occurs: the safety trigger event being detected; the speed of the vehicle being greater than a predetermined second speed threshold; the acceleration of the vehicle being greater than a predetermined acceleration threshold; and the vehicle leaving a predetermined area. Herein, the second speed threshold is greater than 10 kilometres per hour, for example, 15 kilometres per hour, particularly 18 kilometres per hour. Herein, the acceleration threshold is greater than or equal to 0 metre per second squared. Herein, the predetermined area may be, for example, the parking space where the vehicle is located or a part of the parking space or a predetermined area on the edge of the road.

The above situations are merely exemplary, and do not mean that all situations of the sending end condition are exhaustive.

In addition, according to a second aspect of the present invention, a method for improving the traffic safety for an infrastructure is provided, as defined by independent claim 7. The method comprises the following steps: receiving a parking safety request from a vehicle; generating pre-warning information based on a current traffic condition, particularly on a traffic condition in a predetermined range around the vehicle, wherein the pre-warning information can at least indicate that the opening of the door of the vehicle will result in a dangerous situation; and sending the pre-warning information to the vehicle. The pre-warning information is periodically generated based on the current traffic condition until a pre-warning end request sent by the vehicle is received. The length of the period may be constant or may be dynamically changing according to the current traffic condition. A length of the period is dynamically changing according to current traffic condition. The pre-warning information includes a type of other traffic participant that is to collide with the opened door and/or an expected time for collision.

In one embodiment of the present invention, the dangerous situation is that the distance between another traffic participant and the door is less than a predetermined distance threshold or that another traffic participant collides with the door. Herein, the predetermined distance threshold may be less than 3 metres, for example, it may be 2.5 metres, particularly 1.5 metres.

In one embodiment of the present invention, feature information of a traffic participant in the environment surrounding the infrastructure is received, wherein the feature information comprises at least one of the following information: the type of the traffic participant; the position of the traffic participant; the moving direction of the traffic participant; the speed of the traffic participant; and the acceleration of the traffic participant.

In one embodiment of the present invention, the pre-warning information is generated based on feature information received from the vehicle and feature information received from another traffic participant.

In addition, according to a third aspect of the present invention, an apparatus for improving the traffic safety for a vehicle is provided, as defined by independent claim 11. The apparatus comprises the following modules: a sending module configured to send a parking safety request to an infrastructure; a receiving module configured to receive pre-warning information that is sent by the infrastructure in response to the parking safety request; a safety trigger event detection module configured to detect a safety trigger event if the pre-warning information indicates that the opening of the door of the vehicle will result in a dangerous situation; and a safety measure trigger module configured to trigger safety measures where the safety trigger event is detected. The sending module is configured to send the parking safety request to the infrastructure where a parking intention for the vehicle is detected. The apparatus further includes a parking intention detection module configured to detect the parking intention for the vehicle when at least one of the following situations occurs: the presence of a parking space being detected, and it being detected that the distance between the vehicle and the parking space is less than a predetermined distance threshold; and the presence of the parking space being detected, and it being detected that a time when a driver's attention is focused on the parking space exceeds a predetermined time threshold. The pre-warning information includes a type of other traffic participant that is to collide with the opened door and/or an expected time for collision.

In one embodiment of the present invention, the dangerous situation is that the distance between another traffic participant and the door is less than a predetermined distance threshold or that another traffic participant collides with the door. Herein, the predetermined distance threshold may be less than 3 metres, for example, it may be 2.5 metres, particularly 1.5 metres.

In one embodiment of the present invention, the safety trigger event detection module is configured to detect the safety trigger event when at least one of the following situations occurs: it being detected that the door of the vehicle is to be opened; the automatic parking function or the semi-automatic parking function being ended; the speed of the vehicle being lowered to 0; a transmission of the vehicle being placed in a parking gear; and a parking brake of the vehicle being placed in a parking position.

In one embodiment of the present invention, the safety measures comprise at least one of the following measures: outputting an audio warning signal; outputting a video warning signal; and outputting a tactile warning signal.

In one embodiment of the present invention, the safety measure trigger module is configured to enable warning information to be displayed on a display apparatus in the vehicle and/or a light emitting apparatus in the vehicle to flash at a predetermined frequency to give a warning and/or a sound producing apparatus in the vehicle to produce a predetermined tone or voice to give a warning. Alternatively or additionally, the safety measure trigger module is configured to enable a warning to be given with the damping for which the door is opened being greater than a predetermined damping threshold. Preferably, the safety measure trigger module is configured to enable a warning to be given with the door being locked upon the first attempt to open the door.

In one embodiment of the present invention, the receiving module is configured to periodically receive the pre-warning information that is sent by the infrastructure in response to the parking safety request until a sending end condition is satisfied, wherein the sending module is particularly configured to send a pre-warning end request to the infrastructure when the sending end condition is satisfied.

In one embodiment of the present invention, the sending end condition is satisfied when at least one of the following situations occurs: the safety trigger event being detected; the speed of the vehicle being greater than a predetermined second speed threshold; the acceleration of the vehicle being greater than a predetermined acceleration threshold; and the vehicle leaving a predetermined area, particularly the parking space where the vehicle is located.

In one embodiment of the present invention, the apparatus for improving the traffic safety for a vehicle according to the present invention further comprises a storage module. The storage module is configured to store the received pre-warning information.

Corresponding features of the above-described method for improving the traffic safety for a vehicle according to the present invention are also applicable to the apparatus for improving the traffic safety for a vehicle according to the third aspect of the present invention.

The apparatus for improving the traffic safety for a vehicle according to the third aspect of the present invention may be implemented, for example, in the form of software, or hardware, or a mixture of software and hardware.

In addition, according to a fourth aspect of the present invention, an apparatus for improving the traffic safety for an infrastructure is provided, as defined by independent claim 17. The apparatus comprises the following modules: a receiving module configured to receive a parking safety request from a vehicle; a pre-warning information generation module configured to generate pre-warning information based on a current traffic condition, wherein the pre-warning information can at least indicate that the opening of the door of the vehicle will result in a dangerous situation; and a sending module configured to send the pre-warning information to the vehicle. The pre-warning information generation module is configured to periodically generate the pre-warning information based on the current traffic condition until the receiving module receives a pre-warning end request sent by the vehicle. Herein, the length of the period may be constant or may be dynamically changing according to the current traffic condition. A length of the period is dynamically changing according to current traffic condition. The pre-warning information includes a type of other traffic participant that is to collide with the opened door and/or an expected time for collision.

In one embodiment of the present invention, the dangerous situation is that the distance between another traffic participant and the door is less than a predetermined distance threshold or that another traffic participant collides with the door. Herein, the predetermined distance threshold may be less than 3 metres, for example, it may be 2.5 metres, particularly 1.5 metres.

In one embodiment of the present invention, the receiving module is configured to receive feature information of a traffic participant in the environment surrounding the infrastructure, wherein the feature information comprises at least one of the following information: the type of the traffic participant; the position of the traffic participant; the moving direction of the traffic participant; the speed of the traffic participant; and the acceleration of the traffic participant.In one embodiment of the present invention, the pre-warning information generation module is configured to generate the pre-warning information based on feature information received from the vehicle and feature information received from another traffic participant.

Corresponding technical features of the above-described method for improving the traffic safety for an infrastructure according to the second aspect of the present invention are also applicable to the apparatus for improving the traffic safety for an infrastructure according to the fourth aspect of the present invention.

The apparatus for improving the traffic safety for an infrastructure according to the fourth aspect of the present invention may be implemented, for example, in the form of software, or hardware, or a mixture of software and hardware.

In addition, according to a fifth aspect of the present invention, a controller for a vehicle is provided. The controller for a vehicle comprises: a processor; and a memory having stored thereon a computer program that, when executed by the processor, implements the steps of the method according to the first aspect of the present invention.

In addition, according to a sixth aspect of the present invention, a vehicle is provided. The vehicle comprises a controller for a vehicle according to the fifth aspect of the present invention.

In addition, according to a seventh aspect of the present invention, a controller for an infrastructure is provided. The controller for an infrastructure comprises: a processor; and a memory having stored thereon a computer program that, when executed by the processor, implements the steps of the method according to the second aspect of the present invention.

In addition, according to an eighth aspect of the present invention, an infrastructure is provided. The infrastructure comprises a controller for an infrastructure according to the seventh aspect of the present invention.

In one preferred implementation of the eighth aspect of the present invention, the infrastructure is a roadside unit. Certainly, the infrastructure may alternatively be any other suitable type of infrastructure.

In addition, according to a ninth aspect of the present invention, a computer-readable storage medium is provided, which has a computer program stored thereon, wherein the computer program, when executed by a processor, implements the steps of a method for improving the traffic safety for a vehicle according to the first aspect of the present invention.

In addition, according to a tenth aspect of the present invention, a computer-readable storage medium is provided, which has a computer program stored thereon, wherein the computer program, when executed by a processor, implements the steps of a method for improving the traffic safety for an infrastructure according to the second aspect of the present invention.

The above-mentioned technical solutions according to the present invention particularly have the following advantages:
1. the technical solutions according to the present invention enable a larger field of view and a stronger computing performance of the infrastructure to be fully used, so as to more reliably make a pre-warning of the danger to traffic safety, particularly in the scenario of opening the door of the vehicle after same is parked;
2. the technical solutions according to the present invention enable the Internet of Vehicles technology to be fully used, so as to make, in a more timely manner, a pre-warning of the danger to traffic safety, particularly in the scenario of opening the door of the vehicle after same is parked;
3. the technical solutions according to the present invention enable a timely and reliable pre-warning of dangerous situations to be provided only when absolutely necessary, without interfering with the normal driving process;
4. the technical solutions according to the present invention require no additional hardware overheads; and
5. the technical solutions according to the present invention can be easily combined with other driving assistance functions or driving safety functions.

### Brief Description of the Drawings

The preferred embodiments of the present invention are described below in detail based on the accompanying drawings. Those skilled in the art should understand that these preferred embodiments are merely exemplary and are not intended to limit the present invention in any manner.
FIG. 1 shows a schematic flowchart of a method for improving the traffic safety for a vehicle according to the present invention.
FIG. 2 shows a schematic flowchart of a method for improving the traffic safety for an infrastructure according to the present invention.
FIG. 3 shows a schematic block diagram of an apparatus for improving the traffic safety for a vehicle according to the present invention.
FIG. 4 shows a schematic block diagram of an apparatus for improving the traffic safety for an infrastructure according to the present invention.

### Detailed Description of Embodiments

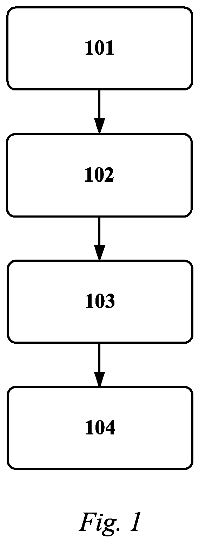

FIG. 1 shows a schematic flowchart of a method for improving the traffic safety for a vehicle according to the present invention. The method is implemented on a vehicle side, for example, in a scenario where a vehicle is temporarily parked or where the vehicle is parked in a parking space.

In a first method step 101, a parking safety request is sent to an infrastructure.

Herein, the parking safety request is particularly automatically sent to the infrastructure where a parking intention for a vehicle is detected.

For example, the parking intention for the vehicle is detected when at least one of the following situations occurs: an automatic parking function or a semi-automatic parking function being enabled; the speed of the vehicle being less than a predetermined first speed threshold; the presence of a parking space being detected, and it being detected that the distance between the vehicle and the parking space is less than a predetermined distance threshold; the presence of the parking space being detected, and it being detected that a time when a driver's attention is focused on the parking space exceeds a predetermined time threshold; a transmission of the vehicle being placed in a parking gear; and a parking brake of the vehicle being placed in a parking position.

Herein, the first speed threshold is less than 10 kilometres per hour, for example, 7 kilometres per hour, particularly 5 kilometres per hour.

Herein, the distance threshold is less than 5 metres, for example, it may be 3 metres, particularly 1.5 metres.

Herein, the time threshold is greater than 0.5 minutes, for example, it may be 1 minute, particularly 1.5 minutes.

The above situations are merely exemplary, and do not mean that all situations where the parking intention is detected are exhaustive.

In a second method step 102, pre-warning information sent by the infrastructure in response to the parking safety request is received.

Herein, the pre-warning information particularly indicates whether the opening of the door of the vehicle will result in a dangerous situation, particularly the door colliding with another traffic participant. For example, the pre-warning information can indicate one of the following situations where the opening of the door will result in a dangerous situation, particularly colliding with another traffic participant; and the opening of the door will not result in a dangerous situation, particularly colliding with another traffic participant. For example, the pre-warning information only indicates that the opening of the door will result in a dangerous situation, particularly colliding with another traffic participant.

In addition, the pre-warning information may further comprise other information, for example, the type of other traffic participant that is to collide with the opened door and/or an expected time for collision, etc.

In a third method step 103, a safety trigger event is detected if the pre-warning information indicates that the opening of the door of the vehicle will result in a dangerous situation.

The safety trigger event is detected when at least one of the following situations occurs: it being detected that the door of the vehicle is to be opened; the automatic parking function or the semi-automatic parking function being ended; the speed of the vehicle being lowered to 0; a transmission of the vehicle being placed in a parking gear; and a parking brake of the vehicle being placed in a parking position. The above situations are merely exemplary, and do not mean that all situations where the safety trigger event is detected are exhaustive.

The safety trigger event can be detected by reading the state of a corresponding functional unit and/or by using a corresponding sensor apparatus.

In a fourth method step 104, safety measures are triggered where the safety trigger event is detected. Herein, the safety measures give, to the participants of the vehicle, a warning that the opening of the door will cause danger and/or hinder, or even stop the participants of the vehicle from opening the door.

For example, the safety measures comprise at least one of the following measures: outputting an audio warning signal; outputting a video warning signal; and outputting a tactile warning signal.

For example, warning information is displayed on a display apparatus in the vehicle and/or a light emitting apparatus in the vehicle flashes at a predetermined frequency to give a warning and/or a sound producing apparatus in the vehicle produces a predetermined tone or voice to give a warning. Alternatively or additionally, a warning is given with the damping for which the door is opened being greater than a predetermined damping threshold. Preferably, a warning is given with the door being locked upon the first attempt to open the door.

Optionally, pre-warning information sent by the infrastructure in response to the parking safety request is periodically received until a sending end condition is satisfied. Herein, the detection of a safety trigger event is to be carried out only if the received pre-warning information indicates that the opening of the door of the vehicle will result in a dangerous situation, and safety measures are triggered where the safety trigger event is detected. In this way, the safety and reliability can be further improved.

Optionally, a pre-warning end request is sent to the infrastructure where the sending end condition is satisfied. For example, the sending end condition is satisfied when at least one of the following situations occurs: the safety trigger event being detected; the speed of the vehicle being greater than a predetermined second speed threshold; the acceleration of the vehicle is greater than a predetermined acceleration threshold; and the vehicle leaving a predetermined area, particularly the parking space where the vehicle is located. The above situations are merely exemplary, and do not mean that all situations of the sending end condition are exhaustive.

Herein, the second speed threshold is greater than 10 kilometres per hour, for example, 15 kilometres per hour, particularly 18 kilometres per hour.

Herein, the acceleration threshold is greater than or equal to 0 metre per second squared.

Herein, the predetermined area may be, for example, the parking space where the vehicle is located or a part of the parking space or a predetermined area on the edge of the road.

According to the present invention, after the pre-warning information sent by the infrastructure is received, the safety measures are not directly triggered for implementation, but triggered only when a corresponding safety trigger event is detected.

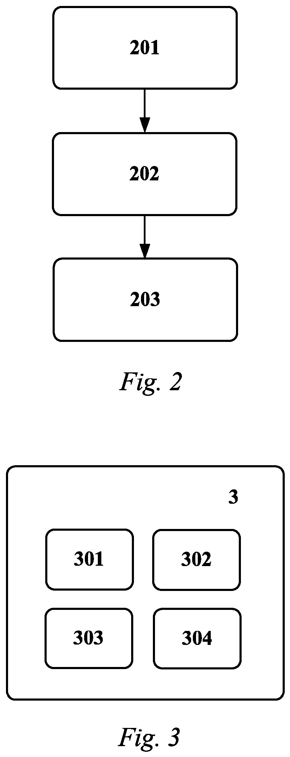

FIG. 2 shows a schematic flowchart of a method for improving the traffic safety for an infrastructure according to the present invention. The method is implemented on an infrastructure side, for example, when a vehicle is temporarily parked or the vehicle is parked in a parking space in the environment surrounding the infrastructure.

In a first method step 201, a parking safety request from a vehicle is received.

In a second method step 202, pre-warning information is generated based on a current traffic condition, particularly in response to the parking safety request. The pre-warning information can at least indicate that the opening of the door of the vehicle will result in a dangerous situation.

In a third method step 203, the pre-warning information is sent to the vehicle.

Herein, the infrastructure can receive feature information of a traffic participant in the environment surrounding the infrastructure. The feature information includes, for example, the type of the traffic participant and/or the position of the traffic participant and/or the moving direction of the traffic participant and/or the speed of the traffic participant and/or the acceleration of the traffic participant. The pre-warning information for the vehicle can be generated based on feature information received from the vehicle and feature information received from another traffic participant.

Herein, the dangerous situation is, for example, that the distance between another traffic participant and the door is less than a predetermined distance threshold or that another traffic participant collides with the door. Herein, the predetermined distance threshold may be less than 3 metres, for example, it may be 2.5 metres, particularly 1.5 metres.

For example, the pre-warning information can indicate one of the following situations where the opening of the door will result in a dangerous situation about the door, particularly colliding with another traffic participant; and the opening of the door will not result in a dangerous situation, particularly the door colliding with another traffic participant. Optionally, the pre-warning information only indicates that the opening of the door will result in a dangerous situation, particularly colliding with another traffic participant.

In addition, the pre-warning information may further comprise other information, for example, the type of other traffic participant that is to collide with the opened door and/or an expected time for collision, etc.

Optionally, the pre-warning information is periodically generated based on the current traffic condition, particularly in response to the parking safety request, until a pre-warning end request sent by the vehicle is received. The length of the period may be constant or may be dynamically changing according to the current traffic condition.

FIG. 3 shows a schematic block diagram of an apparatus for improving the traffic safety for a vehicle according to the present invention. The apparatus for improving the traffic safety for a vehicle according to the present invention is particularly arranged in a vehicle.

Herein, the apparatus 3 for improving the traffic safety for a vehicle according to the present invention comprises a sending module 301, a receiving module 302, a safety trigger event detection module 303, and a safety measure trigger module 304. The sending module 301 is configured to send a parking safety request to an infrastructure. The receiving module 302 is configured to receive pre-warning information that is sent by the infrastructure in response to the parking safety request. The safety trigger event detection module 303 is configured to detect a safety trigger event if the pre-warning information indicates that the opening of the door of the vehicle will result in a dangerous situation. The safety measure trigger module 304 is configured to trigger safety measures where the safety trigger event is detected.

For example, the sending module 301 is configured to send the parking safety request to the infrastructure where a parking intention for the vehicle is detected.

Optionally, the apparatus 3 for improving the traffic safety for a vehicle according to the present invention further comprises a parking intention detection module (not shown). The parking intention detection module is configured to detect the parking intention for the vehicle when at least one of the following situations occurs: an automatic parking function or a semi-automatic parking function being enabled; the speed of the vehicle being less than a predetermined first speed threshold; the presence of a parking space being detected, and it being detected that the distance between the vehicle and the parking space is less than a predetermined distance threshold; the presence of the parking space being detected, and it being detected that a time when a driver's attention is focused on the parking space exceeds a predetermined time threshold; a transmission of the vehicle being placed in a parking gear; and a parking brake of the vehicle being placed in a parking position. The above situations are merely exemplary, and do not mean that all situations where the parking intention is detected are exhaustive.

Herein, the first speed threshold is less than 10 kilometres per hour, for example, 7 kilometres per hour, particularly 5 kilometres per hour. The distance threshold is less than 5 metres, for example, it may be 3 metres, particularly 1.5 metres. The time threshold is greater than 0.5 minutes, for example, it may be 1 minute, particularly 1.5 minutes.

Herein, the dangerous situation is, for example, that the distance between another traffic participant and the door is less than a predetermined distance threshold or that another traffic participant collides with the door. Herein, the predetermined distance threshold may be less than 3 metres, for example, it may be 2.5 metres, particularly 1.5 metres.

For example, the pre-warning information particularly indicates whether the opening of the door of the vehicle will result in a dangerous situation, particularly the door colliding with another traffic participant. For example, the pre-warning information can indicate one of the following situations where the opening of the door will result in a dangerous situation, particularly colliding with another traffic participant; and the opening of the door will not result in a dangerous situation, particularly colliding with another traffic participant. For example, the pre-warning information only indicates that the opening of the door will result in a dangerous situation, particularly colliding with another traffic participant. In addition, the pre-warning information may further comprise other information, for example, the type of other traffic participant that is to collide with the opened door and/or an expected time for collision, etc.

For example, the safety trigger event detection module is configured to detect the safety trigger event when at least one of the following situations occurs: it being detected that the door of the vehicle is to be opened; the automatic parking function or the semi-automatic parking function being ended; the speed of the vehicle being lowered to 0; a transmission of the vehicle being placed in a parking gear; and a parking brake of the vehicle being placed in a parking position. The above situations are merely exemplary, and do not mean that all situations where the safety trigger event is detected are exhaustive.

For example, the safety measures comprise at least one of the following measures: outputting an audio warning signal; outputting a video warning signal; and outputting a tactile warning signal.

For example, the safety measure trigger module 304 is configured to enable warning information to be displayed on a display apparatus in the vehicle and/or a light emitting apparatus in the vehicle to flash at a predetermined frequency to give a warning and/or a sound producing apparatus in the vehicle to produce a predetermined tone or voice to give a warning. Alternatively or additionally, the safety measure trigger module 304 is configured to enable a warning to be given with the damping for which the door is opened being greater than a predetermined damping threshold. Preferably, the safety measure trigger module 304 is configured to enable a warning to be given with the door being locked upon the first attempt to open the door.

For example, the receiving module is configured to periodically receive the pre-warning information that is sent by the infrastructure in response to the parking safety request until a sending end condition is satisfied. Herein, the sending module is particularly configured to send a pre-warning end request to the infrastructure where the sending end condition is satisfied.

Optionally, the sending end condition is satisfied when at least one of the following situations occurs: the safety trigger event being detected; the speed of the vehicle being greater than a predetermined second speed threshold; the acceleration of the vehicle being greater than a predetermined acceleration threshold; and the vehicle leaving a predetermined area, particularly the parking space where the vehicle is located. The above situations are merely exemplary, and do not mean that all situations of the sending end condition are exhaustive.

Optionally, the apparatus 3 for improving the traffic safety for a vehicle according to the present invention further comprises a storage module (not shown). The storage module is configured to store the received pre-warning information.

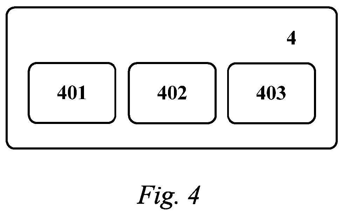

FIG. 4 shows a schematic block diagram of an apparatus for improving the traffic safety for an infrastructure according to the present invention. The apparatus for improving the traffic safety for an infrastructure according to the present invention is particularly arranged in an infrastructure.

Herein, the apparatus 4 for improving the traffic safety for an infrastructure according to the present invention comprises a receiving module 401, a pre-warning information generation module 402, and a sending module 403. The receiving module 401 is configured to receive a parking safety request from a vehicle. The pre-warning information generation module 402 is configured to generate pre-warning information based on a current traffic condition, particularly in response to the parking safety request. Herein, the pre-warning information can at least indicate that the opening of the door of the vehicle will result in a dangerous situation. The sending module 403 is configured to send the pre-warning information to the vehicle.

Herein, the dangerous situation is, for example, that the distance between another traffic participant and the door is less than a predetermined distance threshold or that another traffic participant collides with the door. Herein, the predetermined distance threshold may be less than 3 metres, for example, it may be 2.5 metres, particularly 1.5 metres.

For example, the pre-warning information can indicate one of the following situations where the opening of the door will result in a dangerous situation, particularly the door colliding with another traffic participant; and the opening of the door will not result in a dangerous situation, particularly the door colliding with another traffic participant. Optionally, the pre-warning information only indicates that the opening of the door will result in a dangerous situation, particularly colliding with another traffic participant. In addition, the pre-warning information may further comprise other information, for example, the type of other traffic participant that is to collide with the opened door and/or an expected time for collision, etc.

For example, the receiving module 401 is further configured to receive feature information of a traffic participant in the environment surrounding the infrastructure. The feature information particularly includes the type of the traffic participant and/or the position of the traffic participant and/or the moving direction of the traffic participant and/or the speed of the traffic participant and/or the acceleration of the traffic participant.

Optionally, the pre-warning information generation module 402 is configured to generate the pre-warning information based on feature information received from the vehicle and feature information received from another traffic participant.

Optionally, the pre-warning information generation module 402 is configured to periodically generate the pre-warning information based on the current traffic condition, particularly in response to the parking safety request, until the receiving module receives a pre-warning end request sent by the vehicle. Herein, the length of the period may be constant or may be dynamically changing according to the current traffic condition.

## Claims

1. Method for improving the traffic safety for a vehicle, the method comprising the following steps:
sending (101) a parking safety request to an infrastructure;
receiving (102) pre-warning information that is sent by the infrastructure in response to the parking safety request;
detecting (103) a safety trigger event if the pre-warning information indicates that the opening of a
door of the vehicle will result in a dangerous situation; and
triggering (104) safety measures where the safety trigger event is detected,
wherein the parking safety request is sent to the infrastructure where a parking intention for the vehicle is detected,
wherein the parking intention for the vehicle is detected when at least one of the following situations occurs:
- the presence of a parking space being detected, and it being detected that the distance between the vehicle and the parking space is less than a predetermined distance threshold;
- the presence of the parking space being detected, and it being detected that a time when a driver's attention is focused on the parking space exceeds a predetermined time threshold, and
wherein the pre-warning information includes a type of other traffic participant that is to collide with the opened door and/or an expected time for collision.

2. Method according to Claim 1, **characterized in that**
the dangerous situation is that the distance between another traffic participant and the door is less than a predetermined distance threshold or that another traffic participant collides with the door.

3. Method according to Claims 1 or 2, **characterized in that**
the safety trigger event is detected when at least one of the following situations occurs:
a) it being detected that the door of the vehicle is to be opened;
b) the automatic parking function or the semi-automatic parking function being ended;
c) the speed of the vehicle being lowered to 0;
d) a transmission of the vehicle being placed in a parking gear; and
e) a parking brake of the vehicle being placed in a parking position.

4. Method according to any one of Claims 1 to 3, **characterized in that** the safety measures comprise at least one of the following measures:
a) outputting an audio warning signal;
b) outputting a video warning signal; and
c) outputting a tactile warning signal.

5. Method according to any one of Claims 1 to 4, **characterized in that**
the pre-warning information sent by the infrastructure in response to the parking safety request is periodically received until a sending end condition is satisfied, wherein a pre-warning end request is sent to the infrastructure particularly where the sending end condition is satisfied.

6. Method according to Claim 5, **characterized in that**
the sending end condition is satisfied when at least one of the following situations occurs:
a) the safety trigger event being detected;
b) the speed of the vehicle being greater than a predetermined second speed threshold;
c) the acceleration of the vehicle is greater than a predetermined acceleration threshold; and
d) the vehicle leaving a predetermined area, particularly the parking space where the vehicle is located.

7. Method for improving the traffic safety for an infrastructure, the method comprising the following steps:
receiving (201) a parking safety request from a vehicle;
generating (202) pre-warning information based on a current traffic condition, wherein the pre-warning information can at least indicate that the opening of a door of the vehicle will result in a dangerous situation; and
sending (203) the pre-warning information to the vehicle,
wherein the pre-warning information is periodically generated based on the current traffic condition until a pre-warning end request sent by the vehicle is received,
wherein a length of the period is dynamically changing according to the current traffic condition, and
wherein the pre-warning information includes a type of other traffic participant that is to collide with the opened door and/or an expected time for collision.

8. Method according to Claim 7, **characterized in that**
the dangerous situation is that the distance between another traffic participant and the door is less than a predetermined distance threshold or that another traffic participant collides with the door.

9. Method according to Claim 7 or 8, **characterized in that**
feature information of a traffic participant in the environment surrounding the infrastructure is received, wherein the feature information comprises at least one of the following information: the type of the traffic participant; the position of the traffic participant; the moving direction of the traffic participant; the speed of the traffic participant; and the acceleration of the traffic participant.

10. Method according to Claim 9, **characterized in that**
the pre-warning information is generated based on feature information received from the vehicle and feature information received from another traffic participant.

11. Apparatus for improving the traffic safety for a vehicle, the apparatus comprising the following modules:
a sending module configured to send a parking safety request to an infrastructure;
a receiving module configured to receive pre-warning information that is sent by the infrastructure in response to the parking safety request;
a safety trigger event detection module configured to detect a safety trigger event if the pre-warning information indicates that the opening of a door of the vehicle will result in a dangerous situation; and
a safety measure trigger module configured to trigger safety measures where the safety trigger event is detected,
wherein the sending module is configured to send the parking safety request to the infrastructure where a parking intention for the vehicle is detected,
wherein the apparatus further includes a parking intention detection module configured to detect the parking intention for the vehicle when at least one of the following situations occurs:
- the presence of a parking space being detected, and it being detected that the distance between the vehicle and the parking space is less than a predetermined distance threshold;
- the presence of the parking space being detected, and it being detected that a time when a driver's attention is focused on the parking space exceeds a predetermined time threshold, and
wherein the pre-warning information includes a type of other traffic participant that is to collide with the opened door and/or an expected time for collision.

12. Apparatus according to Claim 11, **characterized in that**
the dangerous situation is that the distance between another traffic participant and the door is less than a predetermined distance threshold or that another traffic participant collides with the door.

13. Apparatus according to any one of Claims 11 to 12, **characterized in that**
the safety trigger event detection module is configured to detect the safety trigger event when at least one of the following situations occurs:
a) it being detected that the door of the vehicle is to be opened;
b) the automatic parking function or the semi-automatic parking function being ended;
c) the speed of the vehicle being lowered to 0;
d) a transmission of the vehicle being placed in a parking gear; and
e) a parking brake of the vehicle being placed in a parking position.

14. Apparatus according to any one of Claims 11 to 13, **characterized in that**
the safety measures comprise at least one of the following measures:
a) outputting an audio warning signal;
b) outputting a video warning signal; and
c) outputting a tactile warning signal.

15. Apparatus according to any one of Claims 11 to 14, **characterized in that**
the receiving module is configured to periodically receive the pre-warning information that is sent by the infrastructure in response to the parking safety request until a sending end condition is satisfied, wherein the sending module is particularly configured to send a pre-warning end request to the infrastructure where the sending end condition is satisfied.

16. Apparatus according to Claim 11, **characterized in that**
the sending end condition is satisfied when at least one of the following situations occurs:
a) the safety trigger event being detected;
b) the speed of the vehicle being greater than a predetermined second speed threshold;
c) the acceleration of the vehicle is greater than a predetermined acceleration threshold; and
d) the vehicle leaving a predetermined area, particularly the parking space where the vehicle is located.

17. Apparatus for improving the traffic safety for an infrastructure, the apparatus comprising the following modules:
a receiving module configured to receive a parking safety request from a vehicle;
a pre-warning information generation module configured to generate pre-warning information based on a current traffic condition, wherein the pre-warning information can at least indicate that the opening of a door of the vehicle will result in a dangerous situation; and
a sending module configured to send the pre-warning information to the vehicle,
wherein the pre-warning information generation module is configured to periodically generate the pre-warning information based on the current traffic condition until the receiving module receives a pre-warning end request sent by the vehicle,
wherein a length of the period is dynamically changing according to the current traffic condition, and
wherein the pre-warning information includes a type of other traffic participant that is to collide with the opened door and/or an expected time for collision.

18. Apparatus according to Claim 17, **characterized in that**
the dangerous situation is that the distance between another traffic participant and the door is less than a predetermined distance threshold or that another traffic participant collides with the door.

19. Apparatus according to Claim 17 or 18, **characterized in that**
the receiving module is configured to receive feature information of a traffic participant in the environment surrounding the infrastructure, wherein the feature information comprises at least one of the following information: the type of the traffic participant; the position of the traffic participant; the moving direction of the traffic participant; the speed of the traffic participant; and the acceleration of the traffic participant.

20. Apparatus according to Claim 19, **characterized in that**
the pre-warning information generation module is configured to generate the pre-warning information based on feature information received from the vehicle and feature information received from another traffic participant.

21. Vehicle **characterized by** comprising an apparatus of any one of Claims 11-16.

22. Infrastructure **characterized by** comprising an apparatus of any one of Claims 17-20.

23. Infrastructure according to Claim 22, **characterized in that** the infrastructure is a roadside unit.

24. Computer-readable storage medium having a computer program stored thereon, **characterized in that**
the computer program, when executed by a processor, implements the steps of a method for improving the traffic safety for a vehicle of any one of Claims 1 to 6.

25. Computer-readable storage medium having a computer program stored thereon, **characterized in that** the computer program, when executed by a processor, implements the steps of a method for improving the traffic safety for an infrastructure of any one of Claims 7 to 10.

## Patentansprüche

1. Verfahren zur Verbesserung der Verkehrssicherheit für ein Fahrzeug, wobei das Verfahren die folgenden Schritte umfasst:
Senden (101) einer Parksicherheitsanfrage an eine Infrastruktur; Empfangen (102) von Vorwarninformationen, die von der Infrastruktur in Reaktion auf die Parksicherheitsanfrage gesendet werden;
Erkennen (103) eines Sicherheitsauslöseereignisses, wenn die Vorwarninformationen anzeigen, dass das Öffnen einer Tür des Fahrzeugs zu einer Gefahrensituation führen wird; und
Auslösen (104) von Sicherheitsmaßnahmen, wenn das Sicherheitsauslöseereignis erkannt wird,
wobei die Parksicherheitsanfrage an die Infrastruktur gesendet wird, wenn eine Parkabsicht für das Fahrzeug erkannt wird,
wobei die Parkabsicht für das Fahrzeug erkannt wird, wenn mindestens eine der folgenden Situationen eintritt:
- das Vorhandensein einer Parklücke wird erkannt und es wird erkannt, dass der Abstand zwischen dem Fahrzeug und der Parklücke geringer ist als ein vorgegebener Abstandsschwellenwert;
- das Vorhandensein der Parklücke wird erkannt und es wird erkannt, dass eine Zeit, in der die Aufmerksamkeit des Fahrers auf die Parklücke gerichtet ist, einen vorgegebenen Zeitschwellenwert überschreitet, und
wobei die Vorwarninformationen einen Typ eines anderen Verkehrsteilnehmers, der mit der geöffneten Tür kollidieren wird, und/oder einen erwarteten Kollisionszeitpunkt beinhalten.

2. Verfahren nach Anspruch 1, **dadurch gekennzeichnet, dass** die Gefahrensituation darin besteht, dass der Abstand zwischen einem anderen Verkehrsteilnehmer und der Tür kleiner als ein vorbestimmter Abstandsschwellenwert ist oder dass ein anderer Verkehrsteilnehmer mit der Tür kollidiert.

3. Verfahren nach Anspruch 1 oder 2, **dadurch gekennzeichnet, dass**
das Sicherheitsauslöseereignis erkannt wird, wenn mindestens eine der folgenden Situationen eintritt:
a) es wird erkannt, dass die Tür des Fahrzeugs geöffnet werden soll;
b) die automatische Parkfunktion oder die halbautomatische Parkfunktion ist beendet;
c) die Geschwindigkeit des Fahrzeugs ist auf 0 gesunken;
d) ein Getriebe des Fahrzeugs ist in einen Parkgang geschaltet; und
e) eine Feststellbremse des Fahrzeugs ist in eine Parkposition gebracht.

4. Verfahren nach einem der Ansprüche 1 bis 3, **dadurch gekennzeichnet, dass**
die Sicherheitsmaßnahmen wenigstens eine der folgenden Maßnahmen umfassen:
a) Ausgeben eines akustischen Warnsignals;
b) Ausgeben eines visuellen Warnsignals; und
c) Ausgeben eines taktilen Warnsignals.

5. Verfahren nach einem der Ansprüche 1 bis 4, **dadurch gekennzeichnet, dass**
die von der Infrastruktur in Reaktion auf die Parksicherheitsanfrage gesendeten Vorwarninformationen periodisch empfangen werden, bis eine Sendeendebedingung erfüllt ist, wobei insbesondere dann, wenn die Sendeendebedingung erfüllt ist, eine Vorwarnendeanfrage an die Infrastruktur gesendet wird.

6. Verfahren nach Anspruch 5, **dadurch gekennzeichnet, dass** die Sendeendebedingung erfüllt ist, wenn mindestens eine der folgenden Situationen eintritt:
a) das Sicherheitsauslöseereignis wird erkannt;
b) die Geschwindigkeit des Fahrzeugs ist größer als ein vorbestimmter zweiter Geschwindigkeitsschwellenwert;
c) die Beschleunigung des Fahrzeugs ist größer als ein vorbestimmter Beschleunigungsschwellenwert; und
d) das Fahrzeug verlässt einen vorbestimmten Bereich, insbesondere die Parklücke, in dem sich das Fahrzeug befindet.

7. Verfahren zur Verbesserung der Verkehrssicherheit für eine Infrastruktur, wobei das Verfahren die folgenden Schritte umfasst:
Empfangen (201) einer Parksicherheitsanfrage von einem Fahrzeug; Erzeugen (202) von Vorwarninformationen basierend auf einer aktuellen Verkehrslage, wobei die Vorwarninformationen mindestens anzeigen können, dass das Öffnen einer Tür des Fahrzeugs zu einer Gefahrensituation führen wird; und
Senden (203) der Vorwarninformationen an das Fahrzeug,
wobei die Vorwarninformationen periodisch basierend auf der aktuellen Verkehrslage erzeugt werden, bis eine vom Fahrzeug gesendete Vorwarnendeanfrage empfangen wird,
wobei sich die Länge der Periode dynamisch gemäß der aktuellen Verkehrslage ändert, und
wobei die Vorwarninformationen einen Typ eines anderen Verkehrsteilnehmers, der mit der geöffneten Tür kollidieren wird, und/oder einen erwarteten Kollisionszeitpunkt beinhalten.

8. Verfahren nach Anspruch 7, **dadurch gekennzeichnet, dass** die Gefahrensituation darin besteht, dass der Abstand zwischen einem anderen Verkehrsteilnehmer und der Tür kleiner als ein vorbestimmter Abstandsschwellenwert ist oder dass ein anderer Verkehrsteilnehmer mit der Tür kollidiert.

9. Verfahren nach Anspruch 7 oder 8, **dadurch gekennzeichnet, dass**
Merkmalsinformationen eines Verkehrsteilnehmers in der die Infrastruktur umgebenden Umgebung empfangen werden, wobei die Merkmalsinformationen mindestens eine der folgenden Informationen umfassen: den Typ des Verkehrsteilnehmers; die Position des Verkehrsteilnehmers; die Bewegungsrichtung des Verkehrsteilnehmers; die Geschwindigkeit des Verkehrsteilnehmers; und die Beschleunigung des Verkehrsteilnehmers.

10. Verfahren nach Anspruch 9, **dadurch gekennzeichnet, dass** die Vorwarninformationen basierend auf vom Fahrzeug empfangenen Merkmalsinformationen und von einem anderen Verkehrsteilnehmer empfangenen Merkmalsinformationen erzeugt werden.

11. Einrichtung zur Verbesserung der Verkehrssicherheit für ein Fahrzeug, wobei die Einrichtung die folgenden Module umfasst:
ein Sendemodul, das dafür ausgelegt ist, eine Parksicherheitsanfrage an eine Infrastruktur zu senden;
ein Empfangsmodul, das dafür ausgelegt ist, Vorwarninformationen zu empfangen, die von der Infrastruktur in Reaktion auf die Parksicherheitsanfrage gesendet werden;
ein Sicherheitsauslöseereignis-Erkennungsmodul, das dafür ausgelegt ist, ein Sicherheitsauslöseereignis zu erkennen, wenn die Vorwarninformationen anzeigen, dass das Öffnen einer Tür des Fahrzeugs zu einer Gefahrensituation führen wird; und
ein Sicherheitsmaßnahmen-Auslösemodul, das dafür ausgelegt ist, Sicherheitsmaßnahmen auszulösen, wenn das Sicherheitsauslöseereignis erkannt wird,
wobei das Sendemodul dafür ausgelegt ist, die Parksicherheitsanfrage an die Infrastruktur zu senden, wenn eine Parkabsicht für das Fahrzeug erkannt wird,
wobei die Einrichtung ferner ein Parkabsicht-Erkennungsmodul umfasst, das dafür ausgelegt ist, die Parkabsicht für das Fahrzeug zu erkennen, wenn mindestens eine der folgenden Situationen eintritt:
- das Vorhandensein einer Parklücke wird erkannt und es wird erkannt, dass der Abstand zwischen dem Fahrzeug und der Parklücke geringer ist als ein vorgegebener Abstandsschwellenwert;
- das Vorhandensein der Parklücke wird erkannt und es wird erkannt, dass eine Zeit, in der die Aufmerksamkeit des Fahrers auf die Parklücke gerichtet ist, einen vorgegebenen Zeitschwellenwert überschreitet, und
wobei die Vorwarninformationen einen Typ eines anderen Verkehrsteilnehmers, der mit der geöffneten Tür kollidieren wird, und/oder einen erwarteten Kollisionszeitpunkt beinhalten.

12. Einrichtung nach Anspruch 11, **dadurch gekennzeichnet, dass** die Gefahrensituation darin besteht, dass der Abstand zwischen einem anderen Verkehrsteilnehmer und der Tür kleiner als ein vorbestimmter Abstandsschwellenwert ist oder dass ein anderer Verkehrsteilnehmer mit der Tür kollidiert.

13. Einrichtung nach einem der Ansprüche 11 bis 12, **dadurch gekennzeichnet, dass**
das Sicherheitsauslöseereignis-Erkennungsmodul dafür ausgelegt ist, das Sicherheitsauslöseereignis zu erkennen, wenn mindestens eine der folgenden Situationen eintritt:
a) es wird erkannt, dass die Tür des Fahrzeugs geöffnet werden soll;
b) die automatische Parkfunktion oder die halbautomatische Parkfunktion ist beendet;
c) die Geschwindigkeit des Fahrzeugs ist auf 0 gesunken;
d) ein Getriebe des Fahrzeugs ist in einen Parkgang geschaltet; und
e) eine Feststellbremse des Fahrzeugs ist in eine Parkposition gebracht.

14. Einrichtung gemäß einem der Ansprüche 11 bis 13, **dadurch gekennzeichnet, dass** die Sicherheitsmaßnahmen mindestens eine der folgenden Maßnahmen umfassen:
a) Ausgeben eines akustischen Warnsignals;
b) Ausgeben eines visuellen Warnsignals; und
c) Ausgeben eines taktilen Warnsignals.

15. Einrichtung nach einem der Ansprüche 11 bis 14, **dadurch gekennzeichnet, dass**
das Empfangsmodul dafür ausgelegt ist, periodisch die Vorwarninformationen, die von der Infrastruktur in Reaktion auf die Parksicherheitsanfrage gesendet werden, zu empfangen, bis eine Sendeendebedingung erfüllt ist, wobei das Sendemodul insbesondere dafür ausgelegt ist, eine Vorwarnendeanfrage an die Infrastruktur zu senden, wenn die Sendeendebedingung erfüllt ist.

16. Einrichtung nach Anspruch 11, **dadurch gekennzeichnet, dass** die Sendeendebedingung erfüllt ist, wenn mindestens eine der folgenden Situationen eintritt:
a) das Sicherheitsauslöseereignis wird erkannt;
b) die Geschwindigkeit des Fahrzeugs ist größer als ein vorbestimmter zweiter Geschwindigkeitsschwellenwert;
c) die Beschleunigung des Fahrzeugs ist größer als ein vorbestimmter Beschleunigungsschwellenwert; und
d) das Fahrzeug verlässt einen vorbestimmten Bereich, insbesondere die Parklücke, in dem sich das Fahrzeug befindet.

17. Einrichtung zur Verbesserung der Verkehrssicherheit für eine Infrastruktur, wobei die Einrichtung die folgenden Module umfasst:
ein Empfangsmodul, das dafür ausgelegt ist, eine Parksicherheitsanfrage von einem Fahrzeug zu empfangen;
ein Vorwarninformationen-Erzeugungsmodul, das dafür ausgelegt ist, Vorwarninformationen basierend auf einer aktuellen Verkehrslage zu erzeugen, wobei die Vorwarninformationen mindestens anzeigen können, dass das Öffnen einer Tür des Fahrzeugs zu einer Gefahrensituation führen wird; und
ein Sendemodul, das dafür ausgelegt ist, die Vorwarninformationen an das Fahrzeug zu senden,
wobei das Vorwarninformationen-Erzeugungsmodul dafür ausgelegt ist, periodisch die Vorwarninformationen basierend auf der aktuellen Verkehrslage zu erzeugen, bis das Empfangsmodul eine vom Fahrzeug gesendete Vorwarnendeanfrage empfängt,
wobei sich die Länge der Periode dynamisch gemäß der aktuellen Verkehrslage ändert, und
wobei die Vorwarninformationen einen Typ eines anderen Verkehrsteilnehmers, der mit der geöffneten Tür kollidieren wird, und/oder einen erwarteten Kollisionszeitpunkt beinhalten.

18. Einrichtung nach Anspruch 17, **dadurch gekennzeichnet, dass** die Gefahrensituation darin besteht, dass der Abstand zwischen einem anderen Verkehrsteilnehmer und der Tür kleiner als ein vorbestimmter Abstandsschwellenwert ist oder dass ein anderer Verkehrsteilnehmer mit der Tür kollidiert.

19. Einrichtung nach Anspruch 17 oder 18, **dadurch gekennzeichnet, dass**
das Empfangsmodul dafür ausgelegt ist, Merkmalsinformationen eines Verkehrsteilnehmers in der die Infrastruktur umgebenden Umgebung zu empfangen, wobei die Merkmalsinformationen mindestens eine der folgenden Informationen umfassen: den Typ des Verkehrsteilnehmers; die Position des Verkehrsteilnehmers; die Bewegungsrichtung des Verkehrsteilnehmers; die Geschwindigkeit des Verkehrsteilnehmers; und die Beschleunigung des Verkehrsteilnehmers.

20. Einrichtung nach Anspruch 19, **dadurch gekennzeichnet, dass** das Vorwarninformationen-Erzeugungsmodul dafür ausgelegt ist, die Vorwarninformationen basierend auf vom Fahrzeug empfangenen Merkmalsinformationen und von einem anderen Verkehrsteilnehmer empfangenen Merkmalsinformationen zu erzeugen.

21. Fahrzeug, **dadurch gekennzeichnet, dass** es eine Einrichtung nach einem der Ansprüche 11-16 umfasst.

22. Infrastruktur, **dadurch gekennzeichnet, dass** sie eine Einrichtung nach einem der Ansprüche 17-20 umfasst.

23. Infrastruktur gemäß Anspruch 22, **dadurch gekennzeichnet, dass** die Infrastruktur eine Straßenrandeinheit ist.

24. Computerlesbares Speichermedium mit einem darauf gespeicherten Computerprogramm, **dadurch gekennzeichnet, dass** das Computerprogramm, wenn es von einem Prozessor ausgeführt wird, die Schritte eines Verfahrens zur Verbesserung der Verkehrssicherheit für ein Fahrzeug nach einem der Ansprüche 1 bis 6 implementiert.

25. Computerlesbares Speichermedium mit einem darauf gespeicherten Computerprogramm, **dadurch gekennzeichnet, dass** das Computerprogramm, wenn es von einem Prozessor ausgeführt wird, die Schritte eines Verfahrens zur Verbesserung der Verkehrssicherheit für eine Infrastruktur nach einem der Ansprüche 7 bis 10 implementiert.

## Revendications

1. Procédé pour améliorer la sécurité de circulation pour un véhicule, le procédé comprenant les étapes suivantes :
l'envoi (101) d'une demande de sécurité de stationnement à une infrastructure ;
la réception (102) d'informations de pré-avertissement qui sont envoyées par l'infrastructure en réponse à la demande de sécurité de stationnement ;
la détection (103) d'un événement de déclenchement de sécurité si les informations de pré-avertissement indiquent que l'ouverture d'une portière du véhicule aurait pour résultat une situation dangereuse ; et
le déclenchement (104) de mesures de sécurité lorsque l'événement de déclenchement de sécurité est détecté,
dans lequel la demande de sécurité de stationnement est envoyée à l'infrastructure lorsqu'une intention de stationnement pour le véhicule est détectée,
dans lequel l'intention de stationnement pour le véhicule est détectée quand au moins une parmi les situations suivantes se produit :
- la présence d'un espace de stationnement est détectée, et il est détecté que la distance entre le véhicule et l'espace de stationnement est inférieure à un seuil de distance prédéterminé ;
- la présence de l'espace de stationnement est détectée, et il est détecté qu'un temps pendant lequel l'attention d'un conducteur est concentrée sur l'espace de stationnement dépasse un seuil de temps prédéterminé, et
dans lequel les informations de pré-avertissement incluent un type d'autre participant à la circulation qui est sur le point d'entrer en collision avec la portière ouverte et/ou un temps prévu pour la collision.

2. Procédé selon la revendication 1, **caractérisé en ce que** la situation dangereuse est que la distance entre un autre participant à la circulation et la portière est inférieure à un seuil de distance prédéterminé ou qu'un autre participant à la circulation entre en collision avec la portière.

3. Procédé selon les revendications 1 ou 2, **caractérisé en ce que**
l'événement de déclenchement de sécurité est détecté quand au moins une parmi les situations suivantes se produit :
a) il est détecté que la portière du véhicule est sur le point d'être ouverte ;
b) la fonction de stationnement automatique ou la fonction de stationnement semi-automatique est terminée ;
c) la vitesse du véhicule est abaissée jusqu'à 0 ;
d) une transmission du véhicule est mise en vitesse de stationnement ; et
e) un frein de stationnement du véhicule est mis dans une position de stationnement.

4. Procédé selon l'une quelconque des revendications 1 à 3, **caractérisé en ce que**
les mesures de sécurité comprennent au moins une parmi les mesures suivantes :
a) la sortie d'un signal d'avertissement audio ;
b) la sortie d'un signal d'avertissement vidéo ; et
c) la sortie d'un signal d'avertissement tactile.

5. Procédé selon l'une quelconque des revendications 1 à 4, **caractérisé en ce que**
les informations de pré-avertissement envoyées par l'infrastructure en réponse à la demande de sécurité de stationnement sont reçues périodiquement jusqu'à ce qu'une condition de terminaison d'envoi soit respectée, dans lequel une demande de terminaison de pré-avertissement est envoyée à l'infrastructure particulièrement lorsque la condition de terminaison d'envoi est respectée.

6. Procédé selon la revendication 5, **caractérisé en ce que** la condition de terminaison d'envoi est respectée quand au moins une parmi les situations suivantes se produit :
a) l'événement de déclenchement de sécurité est détecté ;
b) la vitesse du véhicule est supérieure à un second seuil de vitesse prédéterminé ;
c) l'accélération du véhicule est supérieure à un seuil d'accélération prédéterminé ; et
d) le véhicule quitte une zone prédéterminée, particulièrement l'espace de stationnement où le véhicule est situé.

7. Procédé pour améliorer la sécurité de circulation pour une infrastructure, le procédé comprenant les étapes suivantes :
la réception (201) d'une demande de sécurité de stationnement en provenance d'un véhicule ;
la génération (202) d'informations de pré-avertissement sur la base d'une condition de circulation actuelle, dans lequel les informations de pré-avertissement peuvent au moins indiquer que l'ouverture d'une portière du véhicule aurait pour résultat une situation dangereuse ; et
l'envoi (203) des informations de pré-avertissement au véhicule, dans lequel les informations de pré-avertissement sont générées périodiquement sur la base de la condition de circulation actuelle jusqu'à ce qu'une demande de terminaison de pré-avertissement envoyée par le véhicule soit reçue,
dans lequel une longueur de la période change dynamiquement selon la condition de circulation actuelle, et
dans lequel les informations de pré-avertissement incluent un type d'autre participant à la circulation qui est sur le point d'entrer en collision avec la portière ouverte et/ou un temps prévu pour la collision.

8. Procédé selon la revendication 7, **caractérisé en ce que** la situation dangereuse est que la distance entre un autre participant à la circulation et la portière est inférieure à un seuil de distance prédéterminé ou qu'un autre participant à la circulation entre en collision avec la portière.

9. Procédé selon la revendication 7 ou 8, **caractérisé en ce que**
des informations de caractéristiques d'un participant à la circulation dans l'environnement entourant l'infrastructure sont reçues, dans lequel les informations de caractéristiques comprennent au moins un élément parmi les informations suivantes : le type du participant à la circulation ; la position du participant à la circulation ; la direction de mouvement du participant à la circulation ; la vitesse du participant à la circulation ; et l'accélération du participant à la circulation.

10. Procédé selon la revendication **9, caractérisé en ce que** les informations de pré-avertissement sont générées sur la base d'informations de caractéristiques reçues en provenance du véhicule et d'informations de caractéristiques reçues en provenance d'un autre participant à la circulation.

11. Appareil pour améliorer la sécurité de circulation pour un véhicule, l'appareil comprenant les modules suivants :
un module d'envoi configuré pour envoyer une demande de sécurité de stationnement à une infrastructure ;
un module de réception configuré pour recevoir des informations de pré-avertissement qui sont envoyées par l'infrastructure en réponse à la demande de sécurité de stationnement ;
un module de détection d'événement de déclenchement de sécurité configuré pour détecter un événement de déclenchement de sécurité si les informations de pré-avertissement indiquent que l'ouverture d'une portière du véhicule aurait pour résultat une situation dangereuse ; et
un module de déclenchement de mesures de sécurité configuré pour déclencher des mesures de sécurité lorsque l'événement de déclenchement de sécurité est détecté,
dans lequel le module d'envoi est configuré pour envoyer la demande de sécurité de stationnement à l'infrastructure lorsqu'une intention de stationnement pour le véhicule est détectée,
dans lequel l'appareil inclut en outre un module de détection d'intention de stationnement configuré pour détecter l'intention de stationnement pour le véhicule quand au moins une parmi les situations suivantes se produit :
- la présence d'un espace de stationnement est détectée, et il est détecté que la distance entre le véhicule et l'espace de stationnement est inférieure à un seuil de distance prédéterminé ;
- la présence de l'espace de stationnement est détectée, et il est détecté qu'un temps pendant lequel l'attention d'un conducteur est concentrée sur l'espace de stationnement dépasse un seuil de temps prédéterminé, et
dans lequel les informations de pré-avertissement incluent un type d'autre participant à la circulation qui est sur le point d'entrer en collision avec la portière ouverte et/ou un temps prévu pour la collision.

12. Appareil selon la revendication 11, **caractérisé en ce que** la situation dangereuse est que la distance entre un autre participant à la circulation et la portière est inférieure à un seuil de distance prédéterminé ou qu'un autre participant à la circulation entre en collision avec la portière.

13. Appareil selon l'une quelconque des revendications 11 et 12, **caractérisé en ce que**
le module de détection d'événement de déclenchement de sécurité est configuré pour détecter l'événement de déclenchement de sécurité quand au moins une parmi les situations suivantes se produit :
a) il est détecté que la portière du véhicule est sur le point d'être ouverte ;
b) la fonction de stationnement automatique ou la fonction de stationnement semi-automatique est terminée ;
c) la vitesse du véhicule est abaissée jusqu'à 0 ;
d) une transmission du véhicule est mise en vitesse de stationnement ; et
e) un frein de stationnement du véhicule est mis dans une position de stationnement.

14. Appareil selon l'une quelconque des revendications 11 à 13, **caractérisé en ce que** les mesures de sécurité comprennent au moins une parmi les mesures suivantes :
a) la sortie d'un signal d'avertissement audio ;
b) la sortie d'un signal d'avertissement vidéo ; et
c) la sortie d'un signal d'avertissement tactile.

15. Appareil selon l'une quelconque des revendications 11 et 14, **caractérisé en ce que**
le module de réception est configuré pour recevoir périodiquement les informations de pré-avertissement qui sont envoyées par l'infrastructure en réponse à la demande de sécurité de stationnement jusqu'à ce qu'une condition de terminaison d'envoi soit respectée, dans lequel le module d'envoi est particulièrement configuré pour envoyer une demande de terminaison de pré-avertissement à l'infrastructure lorsque la condition de terminaison d'envoi est respectée.

16. Appareil selon la revendication 11, **caractérisé en ce que** la condition de terminaison d'envoi est respectée quand au moins une parmi les situations suivantes se produit :
a) l'événement de déclenchement de sécurité est détecté ;
b) la vitesse du véhicule est supérieure à un second seuil de vitesse prédéterminé ;
c) l'accélération du véhicule est supérieure à un seuil d'accélération prédéterminé ; et
d) le véhicule quitte une zone prédéterminée, particulièrement l'espace de stationnement où le véhicule est situé.

17. Appareil pour améliorer la sécurité de circulation pour une infrastructure, l'appareil comprenant les modules suivants :
un module de réception configuré pour recevoir une demande de sécurité de stationnement en provenance d'un véhicule ;
un module de génération d'informations de pré-avertissement configuré pour générer des informations de pré-avertissement sur la base d'une condition de circulation actuelle, dans lequel les informations de pré-avertissement peuvent au moins indiquer que l'ouverture d'une portière du véhicule aurait pour résultat une situation dangereuse ; et
un module d'envoi configuré pour envoyer les informations de pré-avertissement au véhicule,
dans lequel le module de génération d'informations de pré-avertissement est configuré pour générer périodiquement les informations de pré-avertissement sur la base de la condition de circulation actuelle jusqu'à ce que le module de réception reçoive une demande de terminaison de pré-avertissement envoyée par le véhicule,
dans lequel une longueur de la période change dynamiquement selon la condition de circulation actuelle, et
dans lequel les informations de pré-avertissement incluent un type d'autre participant à la circulation qui est sur le point d'entrer en collision avec la portière ouverte et/ou un temps prévu pour la collision.

18. Appareil selon la revendication 17, **caractérisé en ce que** la situation dangereuse est que la distance entre un autre participant à la circulation et la portière est inférieure à un seuil de distance prédéterminé ou qu'un autre participant à la circulation entre en collision avec la portière.

19. Appareil selon la revendication 17 ou 18, **caractérisé en ce que**
le module de réception est configuré pour recevoir des informations de caractéristiques d'un participant à la circulation dans l'environnement entourant l'infrastructure, dans lequel les informations de caractéristiques comprend au moins un élément parmi les informations suivantes : le type du participant à la circulation ; la position du participant à la circulation ; la direction de mouvement du participant à la circulation ; la vitesse du participant à la circulation ; et l'accélération du participant à la circulation.

20. Appareil selon la revendication 19, **caractérisé en ce que** le module de génération d'informations de pré-avertissement est configuré pour générer les informations de pré-avertissement sur la base d'informations de caractéristiques reçues en provenance du véhicule et d'informations de caractéristiques reçue en provenance d'un autre participant à la circulation.

21. Véhicule, **caractérisé en ce qu'**il comprend un appareil de l'une quelconque des revendications 11 à 16.

22. Infrastructure, **caractérisée en ce qu'**elle comprend un appareil de l'une quelconque des revendications 17 à 20.

23. Infrastructure selon la revendication 22, **caractérisée en ce que** l'infrastructure est une unité de bord de route.

24. Support de stockage lisible par ordinateur ayant un programme d'ordinateur stocké sur celui-ci, **caractérisé en ce que**
le programme d'ordinateur, quand il est exécuté par un processeur, met en œuvre les étapes d'un procédé pour améliorer la sécurité de circulation pour un véhicule de l'une quelconque des revendications 1 à 6.

25. Support de stockage lisible par ordinateur ayant un programme d'ordinateur stocké sur celui-ci, **caractérisé en ce que** le programme d'ordinateur, quand il est exécuté par un processeur, met en œuvre les étapes d'un procédé pour améliorer la sécurité de circulation pour une infrastructure de l'une quelconque des revendications 7 à 10.
